Europäisches Patentamt

(19) European Patent Office

Office européen des brevets

(11) Numéro de publication: **0 064 929**

**A1**

(12) **DEMANDE DE BREVET EUROPEEN**

(21) Numéro de dépôt: **82400850.2**

(22) Date de dépôt: **07.05.82**

(51) Int. Cl.³: **E 05 F 15/16**
**H 02 P 7/00**

(30) Priorité: **13.05.81 FR 8109511**

(43) Date de publication de la demande:
**17.11.82 Bulletin 82/46**

(84) Etats contractants désignés:
**DE GB IT**

(71) Demandeur: **ACIERS ET OUTILLAGE PEUGEOT Société dite:**

**F-25400 Audincourt(FR)**

(72) Inventeur: **Barge, Jean**
**42 Rue d'Audincourt**
**F-25200 Montbeliard(FR)**

(74) Mandataire: **Polus, Camille et al,**
**c·o Cabinet Lavoix 2, Place d'Estienne d'Orves**
**F-75441 Paris Cedex 09(FR)**

(54) Dispositif de commande de panneaux mobiles notamment de panneaux ouvrants d'un véhicule automobile.

(57) Ce dispositif commande un moteur d'entraînement (1) d'un panneau à l'aide d'un transistor de puissance (6) par l'intermédiaire d'un commutateur (4) de sélection du sens de la marche du moteur. Le transistor (6) est commandé par un circuit de temporisation comportant un circuit RC (14, 15) et des transistors intermédiaires (10, 12) de telle sorte qu'après chaque actionnement du commutateur (4), le transistor (6) soit d'abord commandé à régime réduit progressivement croissant pour passer ensuite à la saturation.

FIG.1

EP 0 064 929 A1

Dispositif de commande de panneaux mobiles
notamment de panneaux ouvrants d'un
véhicule automobile.-

La présente invention est relative aux dispositifs de commande du déplacement des panneaux mobiles ou
analogues. Plus précisément, l'invention concerne la commande des panneaux ouvrants des véhicules automobiles.

Durant ces dernières années, on a mis au point
des dispositifs de commande électrique de ce genre permettant de décharger autant que possible le conducteur
du véhicule de la fonction de commande, lorsqu'il désire
ouvrir ou fermer une glace ou le toit ouvrant. En d'autres termes, on a tenté de créer des circuits qui, moyennant une action très brève du conducteur, mise en quelque sorte en mémoire, permettent de commander sur une
période nettement plus prolongée l'opération devant résulter de cette action.

Par exemple, pour qu'une glace s'ouvre ou se
ferme complètement, il suffit que le conducteur enfonce
très brièvement un bouton de commande. Des circuits de ce
genre ont été décrits notamment dans les FR. 2 460 363,
80 12 523 et 81 01 793.

Les circuits décrits dans ces documents fonctionnent de façon satisfaisante, mais ils sont relativement
complexes et donc assez coûteux, ce qui permet leur utilisation dans les véhicules " de haut de gamme "uniquement.

Or, il est souhaitable pour augmenter le confort de conduite,
d'équiper tout véhicule et même des véhicules déjà en service de commandes électriques pouvant actionner les panneaux mobiles et le besoin s'est donc fait sentir de créer un circuit de commande moins complexe et, par conséquent, moins coûteux.

Il est évidemment possible pour réduire la durée
de l'action du conducteur ( ce qui est souhaitable notamment lors des péages sur autoroute) d'augmenter la vitesse du moteur entraînant le panneau, mais dans ce cas, il
devient très difficile de placer le panneau à une position intermédiaire de sa course.

L'invention a pour but de fournir un dispositif
de commande du genre indiqué ci-dessus permettant pour un coût de réalisation minimal d'effectuer les commandes de la course totale du panneau par une action aussi brève que possible, tout en comportant la possibilité de placer facilement le panneau dans toute position intermédiaire.

L'invention a donc pour objet un circuit de commande du déplacement d'un panneau ou analogue, notamment d'un panneau de véhicule automobile, comprenant un moteur d'entraînement destiné à assurer les mouvements du panneau et à être connecté, en série avec un commutateur de sélection de marche du moteur, sur une source d'alimentation électrique, ce circuit étant caractérisé en ce qu'il comporte des moyens pour, après chaque actionnement dudit commutateur de sélection de marche, alimenter ledit moteur en deux phases d'alimentation, une première phase étant régie par une loi non linéaire d'alimentation croissante déterminée par les composants du circuit de commande, et étant suivie d'une deuxième phase au cours de laquelle ledit moteur fonctionne à plein régime.

Il résulte de ces caractéristiques que la vitesse nominale d'entraînement du moteur électrique peut être choisie à une valeur aussi grande que possible réduisant ainsi le temps de commande pour la course totale à un minimum, alors que l'utilisateur peut toujours sélectionner une position intermédiaire du panneau pendant la première phase de fonctionnement du moteur, au besoin en répétant la commande à plusieurs reprises pour chaque fois alimenter le moteur à régime réduit. Par ailleurs, le circuit conçu suivant l'invention formant une unité autonome, il est possible d'équiper des véhicules pourvus de lève-vitre électriques à commande directe de l'interrupteur et déjà en service, le circuit pouvant alors avantageusement être commercialisé sous la forme d'un ensemble à assembler soi-même.

L'invention est exposée ci-après plus en détail à l'aide du dessin représentant seulement un mode d'éxécution.

- la Fig.1 montre un schéma d'un dispositif de commande pour panneau réalisé suivant un premier mode de mise en oeuvre de l'invention;

- la Fig. 2 est un graphique montrant la course d'un panneau mobile en fonction du temps, courbe qui est réalisée par le dispositif représenté sur la Fig. 1;

- la Fig.3 montre un autre mode de réalisation de l'invention.

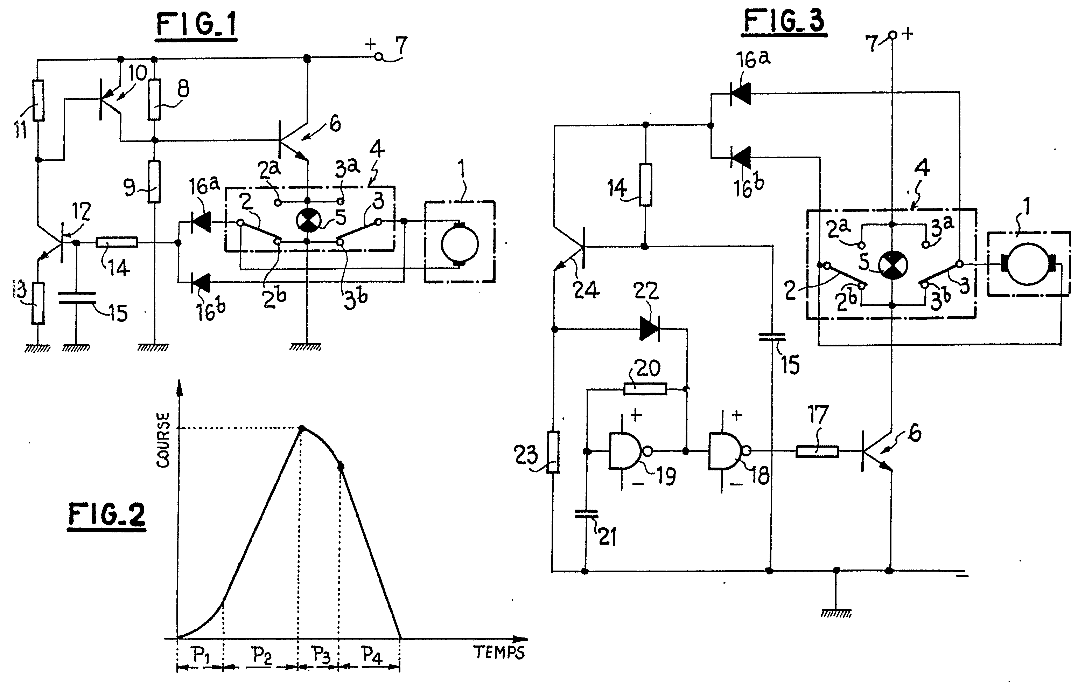

En se référant tout d'abord à l'exemple représenté sur la Fig.1, on voit que le dispositif de commande comporte un moteur d'entraînement 1 qui est du type à courant continu et qui par l'intermédiaire d'un mécanisme, connu en soi et non représenté, entraîne le panneau ouvrant, ce dernier pouvant être par exemple une glace ou le toît ouvrant d'un véhicule automobile.

Les bornes du moteur sont respectivement connectées aux contacts mobiles 2 et 3 d'un inverseur de commande 4. Ce dernier comprend des contacts fixes 2a et 2b associés au contact mobile 2 et des contacts fixes 3a et 3b associés au contact mobile 3. Les contacts fixes 2a et 3a sont reliés ensemble et également à l'une des bornes d'une lampe témoin 5 dont l'autre borne est connectée aux contacts fixes 2b et 3b de l'inverseur 4. Ces contacts sont également reliés ensemble et les contacts fixes 2a et 3a sont reliés à l'émetteur d'un transistor npn 6 dont le collecteur est relié à la borne positive 7 d'une source d'alimentation qui dans le cas de l'application à un véhicule automobile est le pôle positif de la batterie.

La base du transistor 6 est reliée à un diviseur de tension comprenant une résistance 8 reliée par ailleurs à la borne positive 7 et une résistance 9 qui est connectée à la masse. Le point intermédiaire de ce diviseur de tension est relié au collecteur d'un transistor 10 du type pnp dont l'émetteur est relié à la borne positive 7 et dont la base est connectée à l'une des extrémités d'une résistance 11, l'autre extrémité de cette résistance étant reliée à la borne positive 7.

La base du transistor 10 est également reliée au collecteur d'un troisième transistor 12 du type npn dont l'émetteur est relié à la masse par une résistance 13 et dont la base est connectée à un circuit de tempori-

4

sation comprenant une résistance 14 et un condensateur 15 qui est par ailleurs relié à la masse.

La résistance 14 est reliée aux cathodes de deux diodes 16a et 16b dont les anodes sont respectivement reliées aux contacts mobiles 2 et 3 de l'inverseur 4.

Le fonctionnement de ce circuit est le suivant.

Lorsque l'alimentation est connectée à la borne 7, le transistor 6 conduit car le potentiel de son émetteur est le reflet de celui de sa base qui est polarisée à la moitié de la tension d'alimentation, par exemple, grâce au choix judicieux des valeurs des résistances 8 et 9 composant le diviseur de tension polarisant cette base. La lampe témoin 5 est donc allumée faiblement et le condensateur 15 est déchargé en partie. Lorsque l'utilisateur actionne l'un ou l'autre des contacts mobiles 2 ou 3 (choisissant ainsi un sens de rotation déterminé du moteur et donc un sens de mouvement correspondant du panneau à commander), le moteur 1 reçoit son alimentation par l'intermédiaire du transistor 6 à environ la moitié de la tension d'alimentation, dans l'exemple décrit ici. Le moteur fonctionne donc à la moitié de son régime et entraîne le panneau à une vitesse réduite.

Simultanément, la résistance 14 est parcourue par un courant qui charge la capacité matérialisée par le condensateur 15. Il en résulte donc que le potentiel de la base du transistor 12 s'accroît, si bien que le courant circulant dans les résistances 11 et 13 augmente . Par suite, le potentiel de la base du transistor 10 diminue à partir de la valeur de la tension d'alimentation de la borne 7 jusqu'à une valeur fixée par les résistances 14 et 15, ce qui débloque progressivement le transistor 10 jusqu'à la pleine conduction. Ainsi, la base du transistor 6 qui était polarisée au repos par les résistances 8 et 9 voit son potentiel porté à une valeur de plus en plus positive.

Les valeurs des composants étant choisies

5

de façon appropriée, on peut faire en sorte qu'au bout d'une seconde par exemple, le transistor 6 est saturé de sorte que le moteur 1 est alimenté à pleine tension, à la chute de tension près du transistor 6. Le moteur fonctionne alors à plein régime et entraîne le panneau mobile à pleine vitesse.

Lorsque l'utilisateur cesse d'actionner l'un ou l'autre des contacts mobiles 2 ou 3, le moteur électrique s'arrête rapidement puisqu'il est court-circuité sur ses bornes par l'inverseur 4. Le condensateur 15 se décharge rapidement à travers le transistor 12 et la résistance 13. Un nouveau cycle peut alors recommancer.

La Fig.2 montre un graphique de la course du panneau en fonction du temps respectivement pour les deux sens de mouvement, c'est-à-dire s'il s'agit d'une vitre, pour la montée et la descente P1,P2 et P3, P4. On voit que les courses de montée et de descente sont constituées de deux phases P1,P3 et P2,P4, respectivement, la première correspondant au démarrage du moteur 1 c'est-à-dire la période pendant laquelle le transistor 6 n'est pas encore saturé, tandis que la seconde correspond au fonctionnement du moteur 1 à plein régime, le transistor 6 étant alors saturé.

La première phase P1 ou P3 peut durer une seconde par exemple, tout autre période de temps pouvant être choisie en fonction des valeurs de la résistance 14 et du condensateur 15.

On voit donc qu'au cours de cette première phase, le circuit suivant l'invention fait croître progressivement la vitesse du moteur qui étant faible au démarrage devient progressivement de plus en plus importante jusqu'à la vitesse maximale.

Ainsi, si l'on commande une course totale, on a, pendant environ une seconde, une augmentation de la vitesse de la valeur V/2 à V. Comme la vitesse maximale est choisie plus élevée que dans les circuits de commande classiques de ce genre, la durée d'action sur l'inverseur 4 est en définitive plus courte et l'utilisateur a donc

6

à intervenir moins longtemps que par le passé.

Si l'on cherche une position intermédiaire de réglage du panneau, on peut après démarrage progressif amener rapidement le panneau au voisinage de la position désirée, l'arrêter par relâchement du bouton de l'inverseur 4, puis effectuer un réglage fin de position, car le panneau se déplace lentement lors d'un second appui sur le bouton de commande de l'inverseur 4 et l'on peut donc facilement régler la position du panneau.

Le dispositif de commande suivant l'invention est très simple et ne prend que très peu de place à tel point que l'on peut l'incorporer facilement soit dans le faisceau de fils qui alimente l'inverseur 4 se trouvant par exemple sur le tableau de bord du véhicule, soit également l'incorporer dans le boîtier de l'inverseur 4 ce qui simplifie naturellement tant la fabrication que le montage sur le véhicule.

On va se référer maintenant à la Fig.3 qui montre, contrairement au mode de réalisation de la Fig.1 qui peut être réalisée en circuit bi-polaire, un circuit réalisé à l'aide de composants MOS.

Dans ce cas, l'inverseur est identique à celui du premier mode de réalisation et les éléments analogues ont, d'une façon générale, reçus les mêmes références que sur cette première figure.

Le transistor 6 est ici relié entre la masse et les contacts fixes 2b et 3b de l'inverseur 4, tandis que les contacts fixes 2a et 3a de ce même inverseur sont reliés à la borne positive 7 d'alimentation du dispositif. La base du transistor 6 est reliée par l'intermédiaire d'une résistance 17 à la sortie d'un inverseur 18, le transistor 6 étant commandé en tout ou rien.

L'entrée de la porte 18 est reliée à la sortie d'une autre porte 19 dont l'entrée est reliée à son tour au point de jonction entre une résistance 20 et un condensateur 21. L'autre extrémité de la résistan-

7

ce 20 est connectée d'une part entre la sortie de l'inverseur 19 et l'entrée de l'inverseur 18 et d'autre part à la cathode d'une diode 22 dont l'anode est reliée au point de jonction entre une résistance 23 et l'émetteur d'un transistor npn 24. L'autre extrémité de la résistance 23 est reliée avec le condensateur 21 à la masse tandis que le collecteur du transistor 24 est connecté aux cathodes des diodes 16a et 16b dont les anodes sont reliées aux contacts mobiles 2 et 3 de l'inverseur 4. La base du transistor 24 est reliée d'une part à une résistance 25 connectée également aux cathodes des diodes 16a et 16b et d'autre part à l'une des extrémités d'un condensateur 26 dont l'extrémité opposée est reliée à la masse.

Le fonctionnement de ce circuit est le suivant.

Au repos , les portes 18 et 19 sont alimentés, la porte 19,la résistance 20 et le condensateur 21 constituant un multivibrateur astable dont la fréquence de basculement est réglée par les valeurs de cette résistance et de ce condensateur. Le rapport cyclique du signal de sortie de ce multivibrateur astable est voisin de 50%, par exemple. Le signal de sortie qui apparaît donc à la sortie de la porte 19 est appliqué à la porte 18 qui inverse le signal pour attaquer la base du transistor 6 par l'intermédiaire de la résistance 17. Il en résulte donc que la lampe témoin 5 est allumée.

Lorsqu'une action est faite sur l'un ou l'autre des contacts mobiles 2 ou 3, le moteur 1 est alimenté à partir de la borne 7 et par l'intermédiaire du circuit du transistor 6. Comme le rapport cyclique du signal attaquant la base du transistor 6 n'est que de 50% environ, le moteur 1 démarre à faible vitesse. Simultanément, la capacité du condensateur 15 se charge par l'intermédiaire de la résistance 14 et de la diode 16a ou 16b suivant le sens de déplacement choisi pour le panneau mobile. Il en résulte que le potentiel appliqué sur la base du transis-

8

tor 24 augmente et il devient donc conducteur en faisant monter le potentiel de la sortie de la porte 19 par l'intermédiaire de l'émetteur du transistor 24 et de la diode 22.

Lorsque le potentiel de la sortie de la porte 19 augmente, le rapport cyclique du multivibrateur astable augmente également ainsi que la valeur basse du signal jusqu'à ce que celui-ci soit continu et au point haut. A la sortie de la porte 19, l'amplitude du signal est constante, mais le signal est haché, le rapport cyclique variant dans un sens choisi tel que le transistor 6 conduit de plus en plus longtemps jusqu'à être saturé. La résistance 14 et le condensateur 15 ont des valeurs qui sont choisies de telle manière que le transistor 6 arrive à saturation au bout d'un temps d'environ une seconde par exemple.

Il en résulte donc que la vitesse de rotation du moteur électrique 1 varie de 50% par exemple à la valeur nominale en une seconde, temps déterminé par l'expérience comme étant un bon compromis entre la facilité de réglage du panneau et la rapidité de fermeture totale.

9

REVENDICATIONS

1. Circuit de commande du déplacement d'un panneau ou analogue, notamment d'un panneau de véhicule automobile, comprenant un moteur d'entraînement (1) destiné à assurer les mouvements du panneau et à être connecté en série avec un commutateur de sélection de marche (4) du moteur sur une source d'alimentation électrique (7), ce circuit étant caractérisé en ce qu'il comporte des moyens (6,10,12,14, 15; 6,18,19,24,25,26) pour après chaque actionnement dudit commutateur de sélection de marche (4), alimenter ledit moteur (1) en deux phases d'alimentation, une première phase étant régie par une loi non linéaire d'alimentation croissante déterminée par les composants du circuit de commande, et étant suivie d'une deuxième phase au cours de laquelle ledit moteur fonctionne à plein régime.

2. Circuit de commande suivant la revendication 1, caractérisé en ce que lesdits moyens assurant une alimentation en deux phases du moteur (1) comprennent un composant semi-conducteur (6) dont le circuit de puissance est branché en série avec le moteur et dont l'électrode de commande connectée à un circuit de temporisation (12 à 15; 18, 19, 24 à 26) déclenché par ledit commutateur de sélection de marche (4) et ne portant ledit composant semi-conducteur à la saturation qu'au bout d'un intervalle de temps prédéterminé.

3. Circuit de commande suivant la revendication 2, caractérisé en ce que ledit circuit de temporisation (12 à 15) est agencé pour augmenter progressivement la tension appliquée à l'électrode de commande dudit composant semi-conducteur (6) pendant ledit intervalle de temps prédéterminé.

4. Circuit de commande suivant la revendication 2, caractérisé en ce que ledit circuit de temporisation (18, 19,24 à 26) est agencé pour faire varier le rapport cyclique d'une suite d'impulsions appliquée à l'électrode de commande dudit composant semi-conducteur (6).

5. Circuit suivant la revendication 3, caracté-

10

risé en ce que ledit circuit de temporisation comporte un circuit RC (14,15) raccordé audit commutateur de sélection (4) de manière que son condensateur soit chargé dès l'actionnement de celui-ci, le circuit RC étant connecté à au moins un composant semi-conducteur intermédiaire (10,12) le reliant audit composant semi-conducteur (6) raccordé en série avec le moteur d'entraînement.

6. Circuit de commande suivant la revendication 4, caractérisé en ce que ledit circuit de temporisation comporte un multivibrateur astable (18,19) dont la sortie est reliée à l'électrode de commande dudit composant semi-conducteur (6) et dont la borne d'alimentation (diode 22) est reliée à un circuit RC (25,26), connecté à son tour au commutateur de sélection (4) de telle manière que, dès actionnement de celui-ci, le condensateur (26) du circuit RC se charge progressivement et fait varier ainsi le rapport cyclique de l'alimentation du moteur jusqu'à la pleine conduction pendant ledit intervalle de temps prédéterminé.

FIG.1

FIG.3

FIG.2

COURSE

TEMPS

P₁  P₂  P₃  P₄

0064929

# 0064929

Office européen
des brevets

## RAPPORT DE RECHERCHE EUROPEENNE

Numéro de la demande

EP  82 40 0850

| | DOCUMENTS CONSIDERES COMME PERTINENTS | | |
|---|---|---|---|
| Categorie | Citation du document avec indication. en cas de besoin, des parties pertinentes | Revendication concernee | CLASSEMENT DE LA DEMANDE (Int Cl ³) |
| A | GB-A-2 051 946  (ACIERS ET OUTILLAGE PEUGOT) * page 1, lignes 40 à 54; figures 1,2 * & FR - A - 2 460 383 | 1 | E 05 F   15/16 H 02 P    7/00 |
| | --- | | |
| A | US-A-3 332 007  (LING-TEMCO-VOUGHT) *  colonne  2, ligne 13 à colonne 3, ligne 16; figure 1 * | 2,3 | |
| | --- | | |
| A | FR-A-2 339 271  (AUTOMOBILES PEUGEOT) *  page 2, lignes 10 à 14; figure 1 * | 1 | |
| | --- | | |
| A | FR-A-1 556 599  (ROBERT BOSCH) *  page 1,  colonne  de  gauche, ligne  33  à colonne  de  droite, ligne 15; figure 1 * | 1 | DOMAINES TECHNIQUES RECHERCHES (Int. Cl. ³) H 02 P    7/00 E 05 F    15/00 B 60 J    7/00 |
| | ----- | | |

Le present rapport de recherche a ete etabli pour toutes les revendications

| Lieu de la recherche | Date d achevement de la recherche | Examinateur |
|---|---|---|
| LA HAYE | 22-07-1982 | WEIHS J.A. |

CATEGORIE DES DOCUMENTS CITES

X   particulierement pertinent a lui seul
Y   particulierement pertinent en combinaison avec un autre document de la meme categorie
A   arriere-plan technologique
O   divulgation non-ecrite
P   document intercalaire

T   theorie ou principe a la base de l invention
E   document de brevet anterieur mais publie à la date de depot ou apres cette date
D   cite dans la demande
L   cite pour d autres raisons

&   membre de la meme famille document correspondant